# EUROPEAN PATENT APPLICATION

(11) **EP 1 601 152 A1**
(43) Date of publication of application: **30.11.2005**
(21) Application number: 04291342.6
(22) Date of filing: 28.05.2004
(51) Int. Cl.: H04L 29/00, H04L 12/00

(54) **Method and apparatus for transmitting data packets in a communication network**

(71) Applicant: Hitachi, Ltd., Chiyoda-ku, Tokyo 101-8010 (JP)
(72) Inventor: Takatani, Yukihiro, 06400 Cannes (FR); Hayashi, Masato, Sagamihara-shi, Kanagawa 228-0805 (JP)
(74) Representative: Beetz & Partner

(57) **Abstract**

The present invention relates to a method and an apparatus for transmitting data packets in a communication network from a source node to a destination node.

The source node sends a data packet to an intermediate node. An intermediate node receives the data packet from the network and forwards the received data packet to the destination node or another intermediate node. The intermediate node comprises a proxy manager (23) which is configured to decide whether to act as a proxy for the received data packet and, in the affirmative, to send a local confirmation packet LACK for confirming the reception of the data packet to the source node or the previous intermediate node of the received data packet. The proxy manager (23) decides separately whether to act as a proxy for individual data packets. The destination node receives the data packet and sends a local confirmation packet LACK for confirming the reception of the data packet to the previous intermediate node.

## Description

The present invention relates to a method and an apparatus, in particular a network node, for transmitting data packets in a communication network from a source node to a destination node.

In most communication networks usually a control mechanism is provided to guarantee the reliability of data transfer between the source and the destination. For this purpose, e.g., the TCP layer of the destination node issues acknowledgement packets to confirm the reception of data packets. The source node adjusts the data packet transmission rate based on received acknowledgement packets by estimating the packet round trip time (RTT) and defines a timeout value depending on the estimated RTT. Then, if the source node sends a packet and the corresponding acknowledgement is not received within the timeout interval, the timeout expires and the sender supposes the network to be in a congestion state. Thereupon, the sender reduces its TCP flow control window size and initiates a slow start mechanism. Thus, the sender intends to transmit data as fast as possible without overloading the network.

This technique is suitable in a wired network where links are stable. However, in a wireless environment where links and their stability are extremely variable compared to fixed networks, the conventional TCP/IP flow control is not adequate, because it assumes the properties of a fixed wired network and does not account for the characteristics of a wireless network. When a route is broken due to the mobility of nodes, a delay is incurred during link reconstruction. However, TCP/IP does not assume a mobile network environment and cannot be aware of a route failure. Thus, standard TCP/IP does not know whether the delay of the acknowledgement is due to a route failure or a network congestion. If the sending node adopts the standard TCP procedure, it reduces its window size and initiates a slow start procedure. Therefore, it will significantly reduce the transmission rate unnecessarily by assuming a serious network congestion.

This becomes particularly significant in ad hoc networks. A wireless ad hoc network consists of a number of wireless mobile nodes that temporarily create a dynamic network on the spot. One major feature in ad hoc networks is that the position of a node can continuously change. In addition, a routing protocol suitable for ad hoc networks must be installed on each mobile node so that every node is able to perform a network router functionality to define a route between different nodes and to forward received data packets accordingly. Thus, a data packet can be delivered in an ad hoc network between source and destination by a route comprising multiple hops.. Due to the mobility of nodes, subsequent packets can follow different routes and can go through different intermediate nodes during the communication. The standardization of routing protocols for mobile ad hoc networks (MANET) is addressed by the IETF MANET working group and specified in the internet draft "Dynamic Source Routing Protocol for Mobile Ad Hoc Networks (DSR)" and RFCs 2501, 3626, 3561, and 3684.

It is an object of the present invention to provide a method and an apparatus for data transmission having an increased reliability and an improved throughput, in particular for use in a wireless communication network.

This object is achieved by the independent claims. The dependent claims refer to preferred embodiments of the invention.

According to the invention, a node in a communication network which receives a data packet decides separately for individual received data packets whether to act as a proxy for the received data packet and, in the affirmative, stores and forwards the received data packet towards the destination. Thus, no dedicated proxy for an entire connection-oriented communication must be defined and maintained, in particular when network changes occur.

If the receiving node is a proxy node or the destination node for the data packet, the receiving node may send a local confirmation packet LACK for confirming the reception of the data packet to the node from which it has received the data packet or a to a node which is indicated as source in the received data packet. This node may be the source node, if the receiving node is the first node in the data packet's route, or a previous intermediate node of the received data packet on its route through the communication network.

If the forwarding node is a proxy node for a received data packet, a source information in the forwarded data packet is changed to the network address of the forwarding node. This allows the next proxy node or the destination node to identify the proxy node which is forwarding the packet.

In a communication network having multiple network links and requiring a routing protocol for the transmission of a data packet from a source node via at least one intermediate node to a destination node, an intermediate node which is arranged between the source and destination node with respect to packet routing and receives the data packet may decide whether to act as a proxy for the received data packet. According to the invention, the decision to act as a proxy is made by the intermediate node separately for each received individual data packet. Thus, no dedicated proxy for an entire connection-oriented communication must be defined and maintained.

If the intermediate node, which is not the destination of the received data packet, decides to act as a proxy, the intermediate node may send a local confirmation packet for confirming the reception of the data packet to the node in the communication network from which it has received the packet or a to a node which is indicated as source in the received data packet. This may be the source node, if the intermediate node is the first intermediate node in the data packet's route, or the previous intermediate node of the received data packet on its route through the communication network.

The received data packet may be forwarded from the intermediate node to the destination node, if the destination node is directly accessible via a network link connected to the intermediate node, or to another intermediate node with the intention to be further passed on towards the destination. The forwarding of the received data packet is preferably controlled by an appropriate routing protocol, such as the ad hoc on demand distance vector (AODV) routing or the optimized link state routing (OLSR) protocol.

When the destination node receives the data packet it may send a local confirmation packet LACK for confirming the reception of the data packet to the previous intermediate node or the source node. The local confirmation packet LACK may be forwarded backwards to the previous proxy node or the source node and serves to confirm a reliable transmission of the respective data packet. By receiving a local confirmation packet LACK, the source node or a proxy node receives information that the corresponding data packet has successfully reached the next proxy node, which is now responsible for the further transmission, or the packet's destination.

In the data transmission method according to the invention, the proxies are decided packet by packet during an ongoing communication. This means that the proxies are not fixed, e. g., during an entire TCP connection, but they are decided per each packet. Deciding proxies separately by each packet is particularly suitable in dynamical networks, because this allows an automatic emergence of proxies during a communication connection which can follow route changes. Thus, it is not necessary to use the same static proxy during the entire communication, as is known by application level proxies, such as HTTP proxies.

Normally, a routing protocol installed in the IP layer chooses the most suitable route for a data packet (i.e. the next hop node) in order to transmit the packet to the destination. Moreover, in dynamic mobile networks this route may change very frequently. Supposed that proxies are defined statically, it may be that after a few seconds the route via fixed proxies is not always the best route to the destination. Furthermore, if the mobility of nodes is quite high, a proxy may be disconnected and the respective connection may fail. In this case, the proxy needs to be redefined in order to resume the communication, what further causes delays and retransmissions.

According to the present invention, proxies are selected packet by packet along the optimized route provided by a routing protocol. This means that the packet-level proxy decision is independent of the routing protocol. Any appropriate routing protocol may be deployed to select the packet route, and some intermediate nodes are selected to become proxies - individually for each data packet - by the packet-level proxy decision principle.

Preferably, the proxy decision performed in a node is based on a network distance that a received data packet has traveled through the network starting from the source node or the previous proxy. A suitable network distance is the hop count for the data packet. Accordingly, when a node receives a data packet, it may calculate the number of hops for the packet, which indicates how many times a packet has been forwarded between nodes. If the hop count corresponds to a given condition, e. g., a node becomes a proxy for this packet. Thus, the proxies are arranged essentially at equal distances along the packet route. This proxy decision is automatic and dynamic. If a network route breaks, the routing protocol will detect the link failure and select a new route, thus, the proxy decision of the next data packet is based on the new network route and the communication is not affected.

It is also preferred that the proxy decision is based on a network stability criterion judging the stability of the network or part of the network. The network stability criterion may preferably judge the stability of at least one network link along the route that the data packet has traveled through the network. In this case, if the detected network status is not stable, a node may positively become a proxy even if the number of hops has not reached the given condition. On the other hand, if the network is stable, a node must not become a proxy even if the number of hops exceeds the predetermined threshold. This further improves the dynamic distribution of packet level proxies in the network. The network stability criterion may, e.g., be derived from routing protocol information such as link status information.

The proxy decision may also be based on a network mobility criterion judging the mobility of network nodes in the network and/or of the network structure which is created by the mobile nodes. If the detected mobility exceeds a given condition, it may be useful for intermediate nodes to decide earlier to become proxy nodes, because increased link instability is expected. This further helps to adapt the proxy distribution in the network based on the dynamic network characteristics.

An intermediate node which decides to act as a proxy may store the received data packet after having forwarded it to the destination node or another intermediate node. If no local confirmation packet LACK for the stored packet is received within a predetermined time period, the intermediate node may resend the stored data packet. On the other hand, if a local confirmation packet LACK for the stored packet is received within the predetermined time period, the stored data packet may be deleted, because its successful reception at the next intermediate node or the destination node is positively confirmed. The retransmission operation for data packets lacking a local confirmation packet LACK may be repeated a predetermined number of times or until a retransmission timeout expires. Thus, an unsuccessful retransmission is terminated after several attempts to avoid a potentially endless activity of the proxy when the next proxy node or the destination node is not available any more.

Preferably, upon receiving a data packet, the destination node sends a global acknowledgement packet ACK to the source node for confirming a successful end-to-end transmission and reception of the data packet. This provides the information to the source node that the data packet has successfully been delivered to the destination node. Thus, the destination node, when receiving a data packet, may return both confirmation packets: a local confirmation packet LACK to the last proxy and a global acknowledgement packet ACK to the source node.

Furthermore, the source node may perform an end-to-end control of transmission reliability for sent data packets based on received global acknowledgement packets ACK. Since a received global acknowledgement packet ACK confirms the reliable transmission of the corresponding data packet, the respective data packet may be deleted from a packet buffer maintained by the transport layer of the transmission protocol in the source node.

According to a preferred embodiment, a transmission reliability control window indicating already sent data packets stored in a packet buffer is shifted based on a received global acknowledgement packet ACK. For instance, the TCP control window indicating the data packets in transmission may be shifted when a global acknowledgement packet ACK is received.

It is further preferred that the source node performs an adaptation of a sending rate for data packets to be sent based on a received local confirmation packet LACK. This allows to adapt the data packet sending rate to the rate of receiving local confirmation packets LACK. Thus, the source node may transmit data packets as fast as possible depending on the throughput of the network, in particular of the link to the next proxy.

The source node may also perform a packet flow control for data packets to be sent based on a received local confirmation packet LACK. For instance, the TCP control window may be enlarged when receiving local confirmation packets, what results in the possibility of having more data packets simultaneously in transit.

Since, according to the invention, the control of packet transmission reliability and the control of the packet sending rate may be performed separately based on the reception of a global acknowledgement packet ACK or a local confirmation packet LACK, respectively, it is possible that the flow control for data packets (TCP control window) is reset only when necessary, i.e. when a local confirmation packet LACK is missing. Since the loss of a data packet on a short network link is less frequent than a packet loss on the entire end-to-end connection, the flow control is reset less frequently (e. g., by reducing the flow control window size and initiating a slow start mechanism as in TCP). This results in a higher packet throughput and overall improved transmission rate and provides a large advantage in efficiency compared to the conventional TCP/IP. In particular in dynamic networks, such as wireless ad hoc networks, the present invention makes it possible that the source node may distinguish between a route failure and a network congestion. This allows to take the appropriate measure by maintaining transmission reliability without compromising the transmission rate or throughput.

According to a preferred embodiment, an intermediate node acting as a proxy maintains a buffering table for storing forwarded data packets. Although the proxy decision is made on a per packet basis, the buffering table may comprise several data packets of one TCP connection and/or data packets of different TCP connections.

A source node and an intermediate node acting as a proxy may encapsulate a data packet before sending the data packet to a succeeding intermediate node or the destination node. The encapsulation may be performed by adding an additional network header to the data packet. Preferably, the encapsulation is performed by IP-in-IP encapsulation, as specified in RFC 2003. Accordingly, an intermediate node acting as a proxy and the destination node may decapsulate a received data packet by removing the additional network header. This has the advantage that the encapsulated packets have a valid IP data format and may also be processed by nodes which conform only to the standard TCP/IP protocol. These nodes, which do not perform any proxy functionality according to the present invention, may forward the received data packets without inspecting the encapsulated content. Thus, the proposed packet-level proxy transmission is backwards compatible to standard TCP/ IP.

Preferably, the next receiver of a data packet, i. e., the address of the next hop, is determined by a routing protocol. The routing protocol may decide on the next node along the packet route towards the destination node based on available routing information. The next hop network address for the data packet may be another intermediate node or the destination node depending on the number of hops required to reach the final destination of the packet.

A network node in a communication network may comprise transmission means adapted to transmit data packets in the communication network, and a proxy manager adapted to decide whether to act as a proxy for a received data packet and, in the affirmative, to store the received data packet and to forward it towards the destination, wherein the proxy manager is configured to decide separately for individual data packets whether to act as a proxy for the received data packet. Thus, no dedicated proxy for an entire connection-oriented communication must be defined and maintained.

Preferably, the proxy manager is further configured to send a local confirmation packet LACK for confirming the reception of the data packet to a node which is indicated as source in the received data packet, if the receiving node is a proxy node or the destination node for the data packet. Thus, the source receives information on the successful delivery of the data packet to the proxy node or the destination node.

The proxy manager may be further configured change a source information in a forwarded data packet to the network address of the forwarding node, if the forwarding node is a proxy node for the data packet. This allows the next proxy node or the destination node to identify the proxy node which is forwarding the packet.

In a communication network for transmitting data packets from a source node to a destination node via at least one intermediate node, an intermediate node comprises a proxy manager which is configured to decide separately whether to act as a proxy for individual data packets on a packet-level basis. If the intermediate node acts as a proxy, it may send a local confirmation packet LACK for confirming the reception of the data packet to the source node or the previous intermediate node of the received data packet.

Upon receiving a data packet, the destination node may send a local confirmation packet LACK for confirming the reception of the data packet to the previous intermediate node which, in turn, may forward the local confirmation packet to the next proxy downstream with respect to the data packet flow.

Preferably, the proxy manager determines a network distance that the received data packet has traveled through the network starting from the source node or the previous proxy. The decision to act as a proxy for the received data packet may be based on the determined network distance. However, the decision may be further effected by other criteria such as network stability or network mobility criteria.

According to a preferred embodiment, the nework node may comprise network monitoring means adapted to determine the network stability criterion and/or the network mobility criterion.

The node may further comprise a buffering module for maintaining a buffering table to store the received data packet. The buffering module may be configured to resend the stored packet, if no local confirmation packet LACK for the data packet is received within a predetermined time period. The buffering module may be further configured to delete the stored packet, if a local confirmation packet LACK for the stored packet is received within the predetermined time period.

The node may further comprise sending control means adapted to control the sending of data packets by performing a packet flow control and/or a sending rate control based on a received local confirmation packet LACK.

The node may further comprise a separate transmission reliability control for performing an end-to-end control for data packet delivery based on a received global acknowledgement packet ACK. Thus, sending rate or packet flow control on one side and packet transmission reliability control on the other side are separated which allows network congestion and temporarily network link failures be treated independently.

The node may further comprise encapsulation means for encapsulating data packets and/or decapsulation means for decapsulating received data packets. Preferably, IP-in-IP encapsulation is performed.

According to a preferred embodiment, the network node may be configured as a source node, an intermediate node or a destination node in the communication network.

The communication network may be an ad hoc network having a number of network nodes that create a dynamic network on the spot. Preferably, the network nodes are wireless mobile nodes having a routing capability to allow multi-hop packet propagation. In particular personal digital assistants (PDA), hand-held or laptop computers, (smart) mobile phones, notebooks, or intelligent devices/sensors having radio access technology are suited.

According to the present invention the reliability of data transmission in a communication network is increased. In addition, the data throughput and the transmission rate is increased. The invention is particularly suitable for ad hoc networks having a high frequency of network link reorganization and frequent link failures.

These and other potential objects, features and advantages of the present invention will appear more fully from the following detailed description of preferred embodiments of the invention. It is to be understood, however, that the scope of the present invention is not limited to the given embodiments shown in the accompanying drawings, wherein
Fig. 1 illustrates schematically the operation of a data transmission method according to the present invention,
Fig. 2 shows schematically an embodiment of the hardware structure of a mobile node,
Fig. 3 illustrates schematically the module structure of a mobile node according to an embodiment of the invention,
Fig. 4 shows schematically the structure of an encapsulated TCP packet,
Fig. 5 shows schematically the delivery of a TCP packet from a source node to a destination node,
Fig. 6 shows schematically the structure of a buffering table maintained by a buffering module according to the invention,
Fig. 7 shows a flowchart of the process performed by a proxy manager according to the invention,
Fig. 8 shows a flowchart illustrating details of the TCP packet receiving process,
Fig. 9 shows a flowchart illustrating details of the LACK receiving process,
Fig. 10 illustrates schematically the data transmission process and the detailed content of a packet which is sent from the source node to the destination node via intermediate nodes, and
Fig. 11 illustrates schematically the data transmission process and the detailed content of a packet which is sent directly from the source node to the destination node.

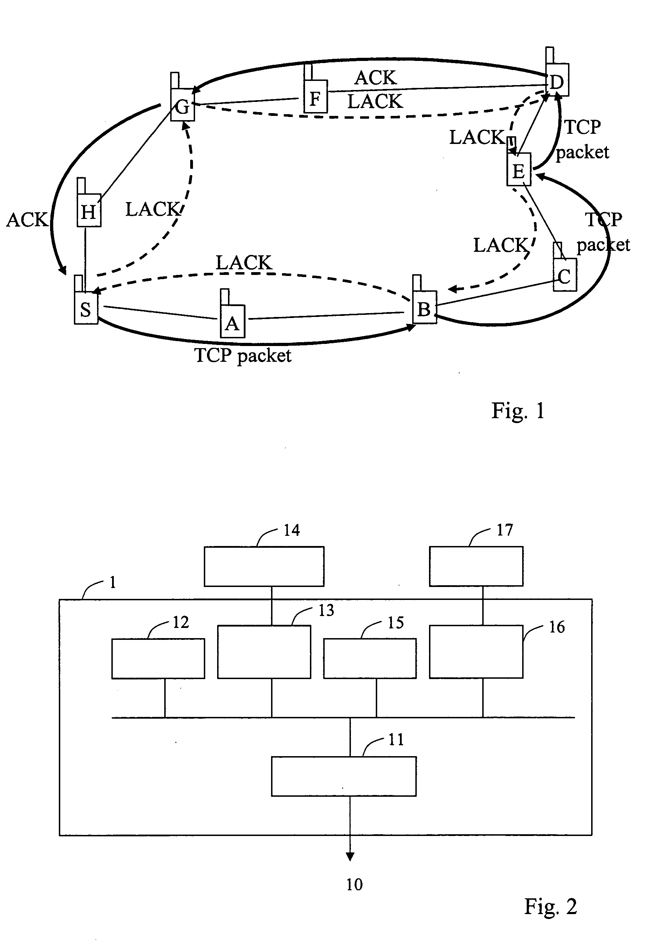

Fig. 1 illustrates schematically the operation of a data transmission method according to the present invention. Mobile terminals A, B, C, D, E, F, G, H, and S with wireless network devices are connected by a wireless ad hoc network. An ad hoc routing protocol is running on each node.

Node S (source) intends to send a data packet to node D (destination), e. g., using TCP/IP as the standard communication protocol. The routing protocol in node S selects, according to available routing information, the next hop node as the node A. Hence, the node S sends a TCP packet to the node A. Before node S sends the packet, it is encapsulated by IP-in-IP encapsulation which is standardized in RFC 2003. This has the advantage that original information concerning acknowledgement, number of hops, and a local link connection (e. g., the IP address of the previous proxy) may be included and preserved in the encapsulated packet. After encapsulation the packet is sent from the node S to node A.

When node A received the packet, it calculates the number of traveled hops for the received packet. Here, node A recognizes that the number of hops is one and so it does not need to become a proxy. In the packet level proxy system according to the invention, an intermediate decides separately for individual received data packets whether it should be a proxy or not. If, e. g., the number of hops for the packet does not meet a predetermined condition, it is not necessary for the intermediate node to become a proxy and the received data packet is simply forwarded to the destination. Similar to node S, a routing protocol in node A selects the next hop node towards the destination node D as the node B. Since node A does not become a proxy it forwards the packet to node B without further processing.

Upon receiving the packet, node B decides, if it should become a proxy or not. In the example illustrated in Fig. 1 the decision to become a proxy is based on a hop count condition of every two hops. Therefore, node B decides to become a proxy. It decapsulates the packet and copies it in its packet buffer. A local confirmation packet LACK is replied back to the source node S. The packet is encapsulated again and forwarded towards the destination node D based on the available routing information from the routing protocol.

When the local confirmation packet LACK from node B reaches node S, node S recalculates its transmission or sending rate or performs a packet flow control. For instance, the TCP window of node S is increased to allow for more simultaneous data packets in transmission. If the TCP window allows the sending of additional data packets, the next TCP packet may be sent. At this moment, the next hop node towards the node D may be different from the previous packet. Because, according to the invention, proxies are decided by each packet, node S can send the packet to the next hop node independent of a change in the identity of the next hop node, what does not affect the proxy operation.

Next, an encapsulated TCP packet goes from node B to node C and then to node E. Node E decides to become a proxy and sends back a local confirmation packet LACK to node B. Next, the packet is forwarded from the node E to node D.

When node B receives the LACK from the node E, it deletes the corresponding packet from its packet buffer. If the node B does not receive an LACK within a certain interval, it implies that the packet must be lost during the transmission and, therefore, it resends the packet towards the destination node B. This procedure may be repeated until a timeout for buffering a packet in node B expires.

When the packet is delivered from node E to node D, node D decapsulates the packet and brings the payload data to the application. Node D sends back a local confirmation packet LACK to node E. In addition, it sends a global acknowledgement packet ACK towards the node S. Supposed that in this moment the routing protocol in node D selects the next hop node towards node S as the node F, the global acknowledgement packet ACK is sent from node D to node F. Similar to the delivery of the data packet from node S to node D, the global acknowledgement packet ACK is delivered along the route "D-F-G-H-S". Finally, node S receives the ACK packet and performs an end-to-end control of transmission reliability for the sent data packet. For example, node S slides the TCP control window indicating unconfirmed data packets which are in transit. Upon receiving the global acknowledgement ACK, node S deletes the corresponding data packet from its packet buffer.

Thus, in the example illustrated in Fig. 1, a TCP packet is delivered from the node S to node D, and a global acknowledgement packet ACK is sent back to the source node S.

Fig. 2 shows schematically an embodiment of the hardware structure of a mobile node 1. A mobile node can be a source node, a destination node, or an intermediate node. A mobile node has at least one network controller 11 connected to the wireless network 10. The mobile node may comprise a CPU 12, a disk controller 13, a hard disk drive 14, a memory 15, a console controller 16, and/or a console 17.

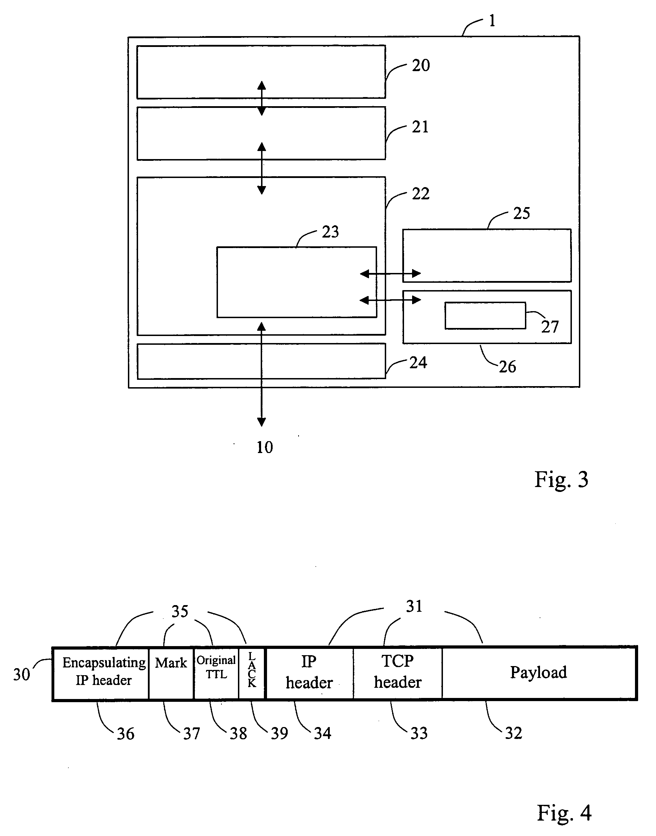

Fig. 3 illustrates schematically the module structure of a mobile node 1 according to an embodiment of the invention. The operation of node 1 is explained by way of example illustrating the sending of data.

An application 20 creates a data and passes it to a modified TCP module 21 when it wants to transmit the data by the TCP protocol to another node. The modified TCP module 21 may be a modified version of standard TCP to implement the packet level proxy method according to the invention. The main modification is the control of the TCP packet control window. According to the invention, the calculation of the transmission rate (packet flow control) for TCP packets is performed based on receiving local confirmation packets LACK, instead of global acknowledgement packets ACK as in standard TCP. In standard TCP, the source node must wait for receiving a global acknowledgement ACK from the destination node in order to calculate the transmission rate. According to the present invention, the source node can calculate the transmission rate by receiving a local confirmation LACK.

The control of transmission reliability in TCP is realized by sliding the TCP packet control window and deleting a confirmed data packet from the packet buffer. As in standard TCP, this is done in the transmission method according to the invention by receiving a global acknowledgement ACK from the destination node.

In the present invention, when the destination node receives a TCP packet, it replies both a local confirmation packet LACK to the previous proxy and a global acknowledgement packet ACK to the source node. However, in standard TCP, the destination node replies only one acknowledgement packet.

Next, the data to be transmitted is passed to the modified IP module 22. The modified IP module 22 may be implemented as a modified version of the standard IP module to realize the packet level proxy method according to the invention. Every data packet that is sent or received has to go through a proxy manager 23 which deals with those packets. The main role of the proxy manager 23 is the decision of the node becoming a proxy or not, and the encapsulation and decapsulation of TCP packets. After the TCP packet is treated by the proxy manager 23, it is transmitted to the wireless network 10 via a network device 24.

The proxy manager 23 communicates with a network monitor 25 and a buffering module 26. The network monitor 25 is responsible for investigating the status of the network 10. It is monitoring, if the network 10 is stable or not. This can, for example, be realized by using the Simple Network Management Protocol (SNMP); see RFC 1157. One preferred criteria of the network status is the packet loss rate. However, other criteria for judging the network stability or network mobility are also suitable. If the network monitor 25 recognizes that the network 10 is unstable, it informs the proxy manager 23 about that. Then, the proxy manager 23 can modify its proxy decision criteria, e.g., it may decide to become a proxy earlier than the predefined default hop number specifies. On the contrary, if the network monitor 25 recognizes that the network 10 is stable, it informs the proxy manager 23 accordingly, and the proxy manager 23 may not decide to become a proxy even if the hop number of a received packet reaches the default hop number.

The buffering module 26 stores TCP packets copied from the proxy manager 23. When a node becomes a proxy, the proxy manager 23 copies received TCP packets to the buffering module 26. The buffering module 26 comprises a buffering table 27 and manages the buffering table 27 by inserting and deleting packets.

Fig. 4 shows schematically the structure of an encapsulated TCP packet 30. According to a preferred embodiment of the invention, IP-in-IP encapsulation (RFC 2003) is used to encapsulate the original TCP packet 31 and to transfer it through the network. The original TCP packet 31 generated by the modified TCP module 21 consists of a payload 32, a TCP header 33, and an IP header 34.

The proxy manager 23 in the mobile node 1 encapsulates a TCP packet 31 which is intended for being sent or forwarded, by IP-in-IP encapsulation. The encapsulation header 35 consists of an IP header 36, a mark 37, the original TTL 38, and the LACK flag 39. Mark 37, original TTL 38, and LACK flag 39 can be put in the IP option field of the IP encapsulation header 35.

In the mark field 37, a predefined string or number which is original for the packet level proxy system may be put in order to identify that the packet belongs to the packet level proxy system or to other applications. Since IP-in-IP encapsulation is the internet standard, other applications may also use this encapsulation mechanism. The packet level proxy system therefore must know, if a packet with IP-in-IP encapsulation belongs to the packet level proxy system or not. This may be determined by investigating whether the unique mark 37 exists in a received packet.

The original TTL 38 may be used for the calculation of the traveled hop count of the received packet. When the proxy manager 23 encapsulates a packet, it puts the value of the TTL field from the received encapsulating IP header into the original TTL field 38 in order to keep the initial TTL value. According to standard IP routing, the TTL value in the encapsulating IP header is decremented when a packet traverses a mobile node. By maintaining the initial TTL value, the proxy manager 23 can calculate the number of hops for the packet by: (original TTL) - (current TTL in the encapsulating IP header).

The LACK flag 39 indicates if the packet is a local confirmation packet or not (0 = no LACK, 1 = LACK). The proxy manager 23 can identify, if this packet is a local confirmation packet or not by checking this flag.

The advantage of using IP-in-IP encapsulation is that a new IP header can be added without changing the original packet. In addition, original information (e.g. original TTL and LACK flag) used for the packet level proxy system can be added into the encapsulating IP header. Furthermore, IP-in-IP encapsulation is the internet standard and, therefore, nodes in which the packet level proxy is not installed can also handle the packet by simply forwarding it without inspecting its content.

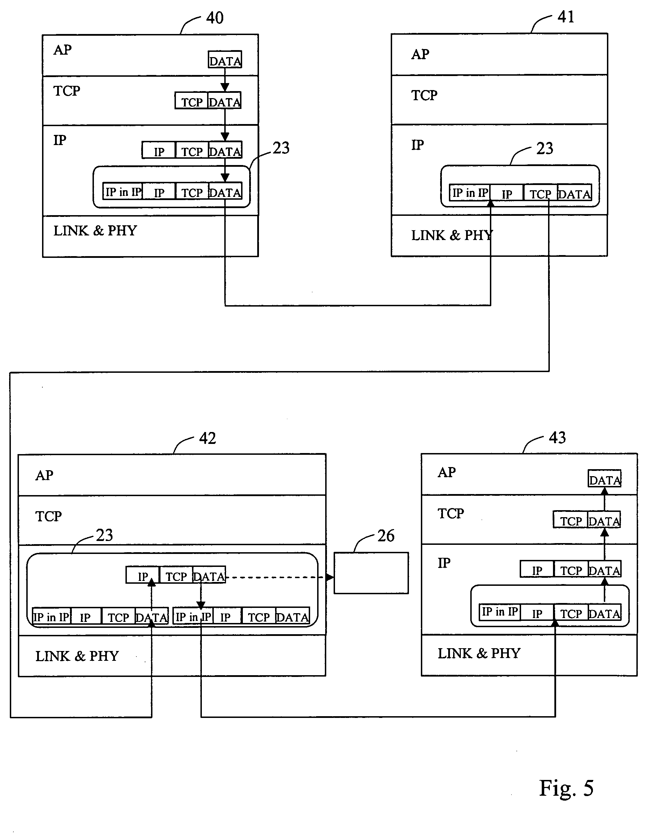

Fig. 5 shows schematically the delivery of a TCP packet from a source node 40 to a destination node 43. It is supposed that the packet is delivered from the source node 40 via the first intermediate node 41 and the second intermediate node 42 to the destination node 43. The second intermediate node 42 will become a proxy in this example.

The transmission functionality in each node 40-43 may be categorized into four layers: an application layer (AP), a TCP layer (TCP), an IP layer (IP), and a link and physical layer (LINK & PHY).

In the source node 40, an application creates a data which is handed over to the TCP layer. In the TCP layer, the data is encapsulated by a TCP header. The packet is then passed down to the IP layer. In the IP layer, the data with the TCP header is encapsulated with an IP header. The encapsulated packet is handed over to the proxy manager 23. In the proxy manager 23 the IP packet is encapsulated by IP-in-IP encapsulation. This packet is then transmitted to the network via the link layer and the physical layer.

When the first intermediate node 41 receives the packet, the packet is transferred to the proxy manager 23 in the IP layer of the first intermediate node 41. The proxy manager 23 investigates the content of the IP-in-IP encapsulation header, calculates the hop count, and decides, if the node should be a proxy or not. In the example shown in Fig. 5, the first intermediate node 41 does not decide to become a proxy. Therefore, it forwards the packet to the next hop node, which is the second intermediate node 42 in this example.

The second intermediate node 42 performs a proxy decision in its proxy manager 23. Since it decides to become a proxy, it sends back a local confirmation packet LACK to the source node 40 (the LACK packet is not shown in Fig. 5). The proxy manager 23 copies the received packet to the buffering module 26 and replaces the IP-in-IP encapsulation header with a new encapsulation header. Then, the packet is sent towards the destination node 43.

When the destination node 43 receives the packet, it decapsulates the packet in its proxy manager 23 and brings the decapsulated packet to the TCP layer. Finally, the payload data is transferred to the respective application in the application layer.

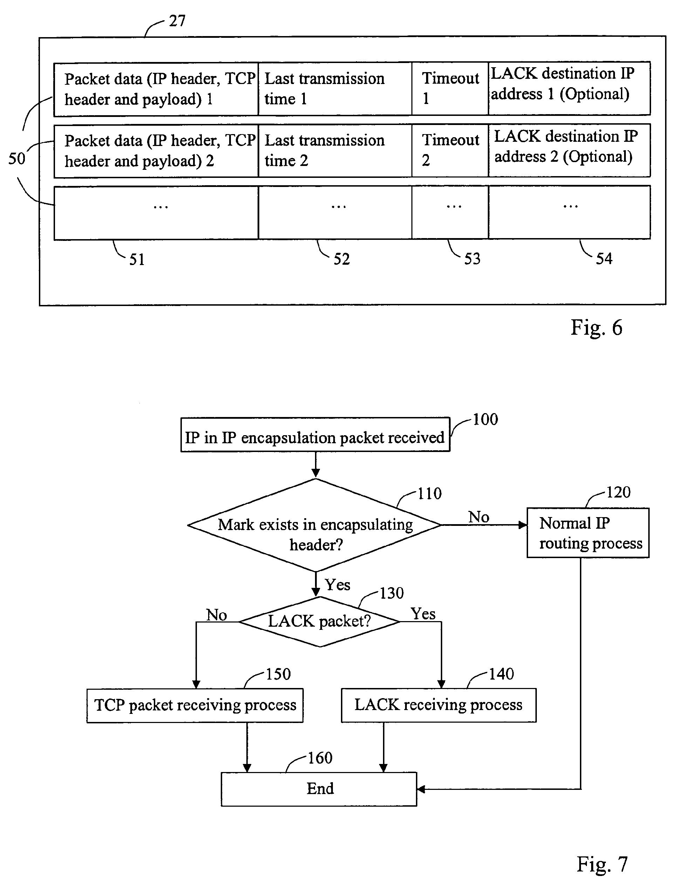

Fig. 6 shows schematically the structure of a buffering table 27 maintained by a buffering module 26 according to the invention. Each table entry 50 consists of several fields: the packet data 51, the last transmission time 52, the timeout 53, and the LACK destination IP address 54. The LACK destination IP address field 54 is optional.

The original packet data including payload, TCP header, and IP header is stored in the packet data field 51. In the last transmission time field 52, the time when the packet has been forwarded towards the destination for the last time is stored. In the timeout field 53, the time when the entry will be erased is stored. In the LACK destination IP address field 54 the IP address of the node that is the destination node for the corresponding local confirmation packet LACK is stored. This address usually corresponds to the previous proxy or the source node. It is used when the proxy manager 23 sends a local confirmation packet LACK to acknowledge the receipt of a data packet to the previous proxy or source node.

The buffering module 26 stores received packets in the buffering table 27 and maintains the buffering table 27. If the buffering module 26 receives a LACK corresponding to a packet in the table 27 from the next proxy, or possibly the destination node, it deletes the corresponding entry from the table 27. The buffering module 26 checks periodically the last transmission time field 52 in each entry 50. If the buffering module 26 determines that a corresponding LACK for an entry has not been received within a certain time period, it informs the proxy manager 23 which resends the packet using the information stored in the buffering table 27. The buffering module 26 also checks the timeout field 53 of each entry 50. If a timeout has elapsed, the corresponding entry 50 is deleted.

Fig. 7 shows a flowchart of the process performed by a proxy manager 23 according to the invention, when it receives an IP-in-IP encapsulated packet from another node (step 100). In step 110, it is investigated whether the unique distinctive mark exists in the received packet. This is to identify, if the received packet belongs to the packet level proxy system or to another application which also uses IP-in-IP encapsulated packets.

If the distinctive mark is not detected, the normal IP routing process is performed in step 120. This means, the TTL value in the IP-in-IP encapsulation header is decreased by one, and the packet is forwarded depending on the destination IP address indicated in the IP-in-IP encapsulating header.

If the received packet comprises the distinctive mark, the proxy manager 23 investigates in step 130 whether the LACK field 39 in the encapsulation header is set. In the affirmative, the proxy manager 23 performs the LACK receiving process in step 140, otherwise it performs the TCP packet receiving process in step 150. The proxy manager process is terminated in step 160.

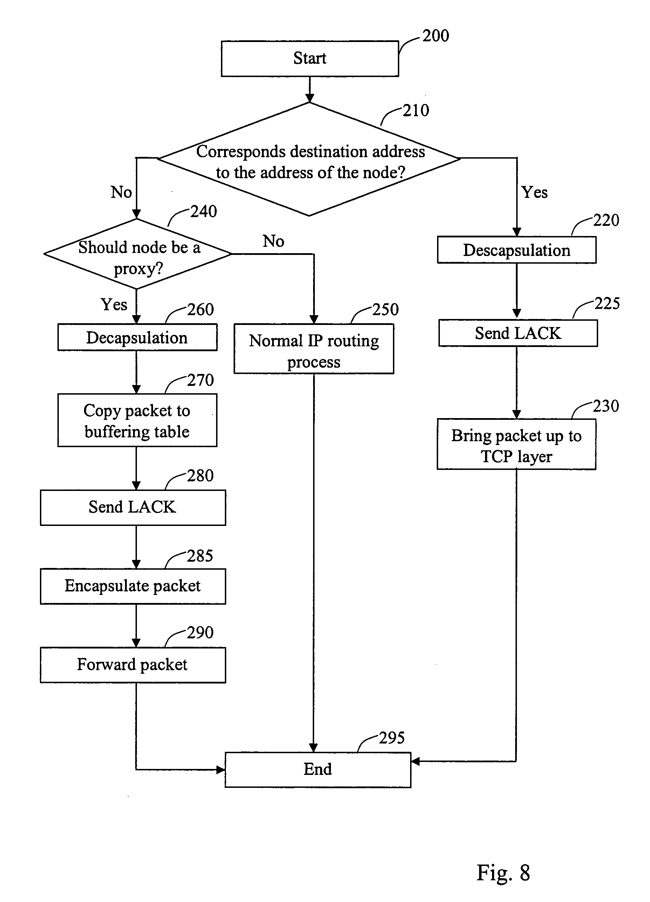

Fig. 8 shows a flowchart illustrating details of the TCP packet receiving process 150. In step 210, it is investigated whether the destination IP address of the IP-in-IP encapsulation header corresponds to the IP address of the receiving node. In the positive, the receiving node is the destination node and the received packet is decapsulated in step 220. After the packet is decapsulated by the destination node at the step 220, it sends back the corresponding LACK towards the previous proxy or the source node (see also step 280). Because the destination node doesn't forward the received packet any more, it only has to send back the LACK and it doesn't need to store the packet in the buffering table. After step 225, the decapsulated packet (i.e. the original TCP packet) is brought up to the TCP layer of the destination node (step 230). The TCP layer will remove the TCP header of the packet and will bring the data (payload) to the application layer. At the same time, the TCP layer issues the global ACK towards the source node of the packet.

If the receiving node is not the destination node for the packet, it is determined in step 240 whether the node should be a proxy or not. For this purpose, the proxy manager 23 receives information from the network monitor 25 concerning the proxy decision criterion. If the node decides not to become a proxy, it performs the normal IP routing process in step 250, as previously described.

If the node decides to become a proxy, it decapsulates the packet in step 260 and copies the packet in step 270 to the buffering table 27 in the buffering module 26. Then, the node creates a local confirmation packet LACK and sends it to the previous proxy (or the source node) in step 280. Next, it encapsulates the packet again with a new IP-in-IP encapsulation header in step 285. After that, the packet is forwarded to the destination node in step 290. The TCP packet receiving process is terminated in step 295.

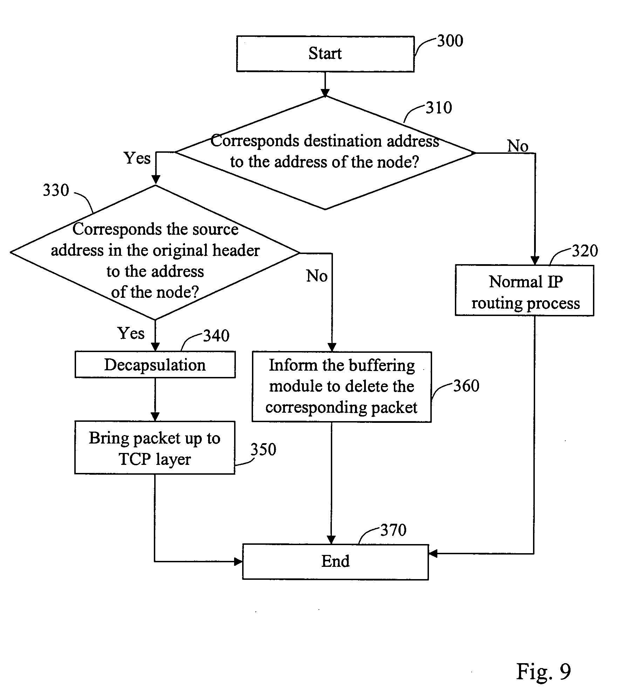

Fig. 9 shows a flowchart illustrating details of the LACK receiving process 140. In step 310, it is determined whether the destination IP address of the IP-in-IP encapsulation header corresponds to the IP address of the receiving node. In the negative, the node performs the normal IP routing process in step 320, as described before. Otherwise, it may be concluded that the receiving node is either the source node or the proxy. Therefore, it is investigated in step 330 whether the source IP address in the original IP header corresponds to the IP address of the node.

If this is the case, it means that the node is the source node of the data packet corresponding to the received local confirmation packet LACK. Therefore, the LACK packet is decapsulated in step 340 and the packet is brought up to the TCP layer in step 350. If it is determined in step 330 that the receiving node is not the source node, it is concluded that the node is a proxy for the corresponding data packet. Therefore, the proxy manager 23 informs the buffering module 26 that the corresponding packet stored in the buffering table 27 may be deleted (step 360). The LACK receiving process is terminated in step 370.

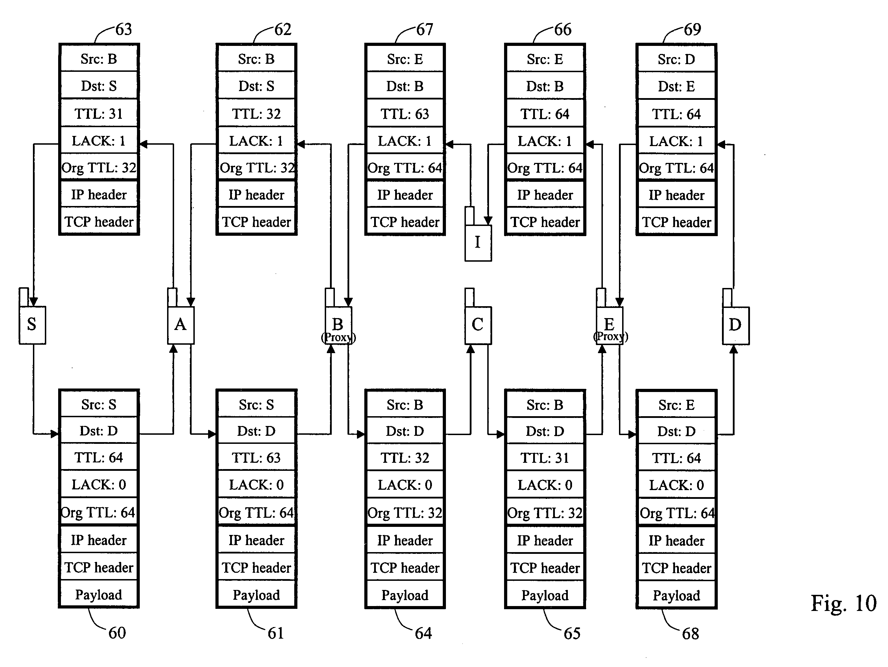

Fig. 10 illustrates schematically the data transmission process and the detailed content of a packet which is sent from the source node S to the destination node D. The arrangement of the nodes S, A, B, C, E, D corresponds to the example shown in Fig. 1. The IP-in-IP encapsulation is used for the packet transmission. In the example shown in Fig. 10 node I is also a mobile node, but it is assumed that this mobile node does not have the packet load proxy system installed, so it performs only standard TCP/IP procedures.

In the first step, the node S sends a packet to the node A. In Fig. 10 the details of the contents of the packet 60 are shown. The original packet consists of payload, TCP header and IP header. Concerning the IP-in-IP encapsulation header, the source IP address field (SRC), the destination IP address field (DST), the TTL field (TTL), the LACK flag (LACK), and the original TTL field (Orig. TTL) are shown. In packet detail 60, the source IP address field equals to the node S, the destination IP address field equals to the node D. In the depicted example, it is further assumed that node S has the default TTL value of 64. Therefore, the TTL field in packet 60 is set to 64. The LACK flag is set to zero and the original TTL field is set to 64.

When the packet arrives at node A, the node does not decide to become a proxy and forwards the packet. The packet is sent from node A to the next hop node B with the content as shown in packet detail 61. The only difference between the packets shown in packet details 60 and 61 is the TTL field which is decreased by one. This is according to the normal IP routing process which decrements the TTL value when a packet is forwarded.

When the packet arrives at node B, the node decides to become a proxy. It creates a local confirmation packet LACK as shown in packet detail 62. The LACK packet is sent towards the node which is indicated in the source IP address field in the IP-in-IP encapsulation header of packet 61 (i.e. node S). As shown in packet detail 62, the source IP address field of the LACK packet equals to node B and the destination IP address field equals to node S. In this example, it is further assumed that the node B has a default TTL value of 32. Therefore, the TTL field in the LACK packet is set to 32. The LACK flag is set to one and the original TTL equals to 32. In the LACK packet 62, the IP header and the TCP header of the original packet 60, 61 is included. The payload of the original packet is not included, because the payload is not a necessary information for confirming the reception of the original packet. This local confirmation packet is delivered to the source node S via the node A.

When node B decides to become a proxy, the node stores the received packet in the buffering table 27 of its buffering module 26. Furthermore, the packet is forwarded to the destination. Therefore, the packet is encapsulated again by node B and transmitted. Details of the packet are shown in packet detail 64. The source address field corresponds to node B, the destination address field is set to node D, the TTL field is set to 32, the LACK field is zero, and the original TTL is 32. This packet is forwarded to node E via node C. In this example, node C does not become a proxy, and node E decides to become a proxy.

Just like node B, node E copies the received packet into its buffering table 27 and sends back a LACK packet towards the node which is indicated in the source address field in the IP-in-IP encapsulation header of the received packet. In this case, it is the node B which is indicated in the source address field of the received packet; see packet detail 65. Node E creates a LACK packet as follows: SRC = E, DST = B, TTL = 64 (it is assumed that the default TTL value of node E is 64), LACK flag = 1, and original TTL = 64.

When node E is going to send the local confirmation packet LACK towards the previous proxy (node B), it is assumed in the example that the network topology has changed. Thus, the routing protocol in node E selects the next hop node towards node B to be the node I. Such changes in network topology can happen frequently in mobile ad hoc networks due to the mobility of the nodes. Thus, the route of a data packet in forward direction can be different from the route of a returning confirmation packet. In this example, the node I receives a LACK packet from the node E. Since it is assumed that the node I does not have the packet level proxy system according to the invention, it performs the standard IP routing process. It inspects the IP-in-IP encapsulation header, decreases the TTL value by one, and forwards the packet towards the destination address of the IP-in-IP encapsulation header (which is node B). Eventually, the LACK packet from node E is delivered to node B via the node I.

Node E also forwards the received data packet towards the destination node D. Finally, the packet reaches node D and the destination node sends back a local confirmation packet LACK to node E.

In this way, the data packet from the node S is delivered to the node D. After the node D receives the TCP packet and recognizes that it is the destination of the packet, it also returns a global acknowledgement packet ACK towards the source node S. This global acknowledgement packet ACK is treated by the mobile nodes in the network in the same way as a usual TCP packet.

Next, it is explained what will happen, if a local confirmation packet LACK is not delivered to the previous proxy or the source node properly. The following two cases are considered:

### Case 1:

The local confirmation packet LACK from node B is not delivered to the source node S. This case can happen, e.g., when the intermediate node B correctly receives the data packet (see packet detail 61) from node A, but thereafter it has gone out of the radio coverage of other nodes in the wireless network. This case can also happen, if node B has been switched off before sending the LACK packet (see packet detail 62), or when node A correctly receives the LACK from node B (see packet detail 62), but has gone out of the coverage of other nodes in the wireless network thereafter. Case 1 can also happen, if node A has been switched off before forwarding the LACK (see packet detail 63). Other possibilities are that the source node S has gone out of the radio coverage of other nodes in the wireless network, or has been switched off before receiving the LACK. In all these cases, the source node S does not receive the local confirmation packet LACK from the node B. Therefore, it cannot calculate its TCP window, respectively its transmission rate. However, for the transmission method according to the present invention, this poses no problem, because the source node just must not change the TCP window in this case. On the other hand, since the delivery of the data packet is controlled by receiving the global acknowledgement packet ACK from the destination node D, the source S will keep the respective data in its TCP window until it receives the global ACK. If the source S does not receive the global acknowledgement packet ACK within a certain time period, it will resend the packet. In this case, the packet level proxies, which are dynamically decided during the course of the packet transmission may be different from those of the previous transmission attempt of the packet. The destination node D may receive the same data packet more than once, but it can simply ignore the replicated packet.

### Case 2:

The local confirmation packet LACK from the node E is not delivered to the node B. This case can happen when node E correctly receives the data packet (see packet detail 65) from node C, but thereafter node E has gone out of the radio coverage of other nodes, or has been switched off before sending the LACK packet (see packet detail 66). Case 2 can also happen when node I correctly receives the LACK (see packet detail 66) from node E, but thereafter it has gone out of the radio coverage of other nodes, or has been switched off before forwarding the LACK (see packet detail 67). Case 2 can further happen when node B has gone out of the wireless network coverage of other nodes, or has been switched off before receiving the LACK. In all such cases, the node B (which is a proxy in the example shown in Fig. 10) does not receive the LACK from node E. Therefore, it will resend the data packet towards the destination node D after a certain time interval. In this case, the involved proxies can be different from those of the previous time. The destination node D may receive the same data packet more than once, but will simply ignore the replicated packet. After several trials of resending the packet, the proxy node B can delete the corresponding entry in the buffering table 27, if a timeout for this entry elapses.

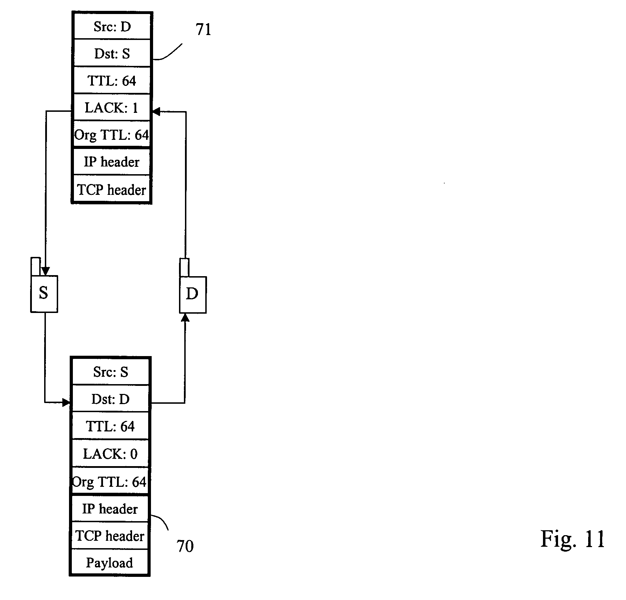

Fig. 11 illustrates schematically the data transmission process and the detailed content of a packet which is sent directly from the source node to the destination node. In the depicted case, there is no intermediate node between the source node S and the destination node D. The source node S transmits an IP-in-IP encapsulated TCP packet according to the routing information provided by the routing protocol towards the destination node D. In this example, the routing table provides a route to send the packet which goes directly to the destination (without intermediate nodes). The detail 70 of the transmitted packet is the same as the detail 60 in Fig. 10.

Node D receives this packet and performs the process shown in Fig. 7. In step 110 "Yes" is selected, then in step 130 "No" is selected, and afterwards the process goes to the TCP packet receiving process (step 150). In the TCP packet receiving process shown in Fig. 8, "Yes" is selected at step 210. Therefore, the packet is decapsulated (step 220) and the node D sends a LACK (step 225) whose content is shown in detail 71. Then the original TCP packet will be brought up to the TCP layer (step 230).

After the received TCP packet is processed by the TCP layer of the destination node D, the TCP layer issues a global ACK towards the source node S. Since a global ACK is also a TCP packet, it is encapsulated by the IP-in-IP encapsulation performed by the proxy manager and transmitted towards the source node S.

In the case above, where the source and the destination node communicate directly, or in a case where there are some intermediate nodes, but no intermediate node becomes a proxy (this can happen when there are only one or two intermediate nodes between the source and the destination node, or the intermediate nodes don't have the packet proxy system installed), it is actually not meaningful to send both a LACK and a global ACK from the destination node to the source node, because there is no proxy in-between which would require the LACK for the packet confirmation. Thus, the LACK will be received by the source node which will also receive the global ACK (i.e. sending LACK and ACK is redundant in this case). However, the proposed system works properly.

The present invention provides a method and an apparatus for improved transmission of data packets in a communication network. Since the proxies are decided packet by packet during a communication connection, the involved proxies are not fixed. The emerging proxies for the individual data packets can follow route changes in the network. Therefore, the proposed invention is particularly suitable for dynamical networks such as wireless ad hoc networks which have a dynamic network topology and frequent route changes.

## Claims

1. Method for transmitting data packets in a communication network from a source node to a destination node, wherein a node which receives a data packet decides whether to act as a proxy for the received data packet and, in the affirmative, stores the received data packet and forwards it towards the destination,
**characterized in that**
the decision by the receiving node to act as a proxy is made separately for individual data packets.

2. Method according to claim 1, wherein, if the receiving node is a proxy node or the destination node for the data packet, the receiving node sends a local confirmation packet LACK for confirming the reception of the data packet to a node which is indicated as source in the received data packet.

3. Method according to claim 1 or 2, wherein a source information in a forwarded data packet is changed to the network address of the forwarding node, if the forwarding node is a proxy node.

4. Method according to at least one of claims 1 to 3, comprising the steps of:
sending a data packet from a source node to an intermediate node;
receiving the data packet by the intermediate node;
deciding, by the intermediate node, whether to act as a proxy for the received data packet and, in the affirmative, sending a local confirmation packet LACK for confirming the reception of the data packet;
forwarding the received data packet from the intermediate node to the destination node or another intermediate node; and
receiving the data packet by the destination node and sending a local confirmation packet LACK for confirming the reception of the data packet.

5. Method according to at least one of claims 1 to 4, wherein the proxy decision is based on a network distance that a received data packet has traveled through the network (10) starting from the source node or the previous proxy, in particular a packet hop count.

6. Method according to at least one of claims 1 to 5, wherein the proxy decision is based on a network stability criterion judging the stability of the network or of part of the network, in particular the stability of at least one network link along the path that the data packet has traveled through the network.

7. Method according to at least one of claims 1 to 6, wherein the proxy decision is based on a network mobility criterion judging the mobility of network nodes in the network and/or of the network structure.

8. Method according to at least one of claims 1 to 7, wherein an intermediate node, which is arranged between the source and destination node with respect to packet routing and acts as a proxy, stores a received data packet, re-sends the data packet if no local confirmation packet for the stored packet is received within a predetermined time period, and deletes the stored packet if a local confirmation packet LACK for the stored packet is received within the predetermined time period.

9. Method according to at least one of claims 1 to 8, wherein the destination node, upon receiving a data packet, sends a global acknowledgment packet ACK to the source node for confirming an end-to-end reception of the data packet.

10. Method according to at least one of claims 1 to 9, wherein the source node performs an end-to-end control of transmission reliability for a sent data packet based on a received global acknowledgment packet ACK.

11. Method according to at least one of claims 1 to 10, wherein a reliability control window indicating already sent data packets, in particular a TCP control window, is shifted based on a received global acknowledgment packet ACK.

12. Method according to at least one of claims 1 to 11, wherein the source node performs an adaptation of a sending rate for data packets based on a received local confirmation packet LACK.

13. Method according to at least one of claims 1 to 12, wherein the source node performs a flow control for data packets to be sent based on a received local confirmation packet LACK.

14. Method according to at least one of claims 1 to 13, comprising: maintaining a buffering table (27) for storing forwarded data packets.

15. Method according to at least one of claims 1 to 14, comprising:
by the source node and an intermediate node acting as proxy, encapsulating a data packet before sending it to an intermediate node or the destination node by adding an additional network header to the data packet; and
by an intermediate node acting as proxy and the destination node, decapsulating a received data packet by removing the additional network header.

16. Method according to at least one of claims 1 to 15, wherein a next hop address for a data packet in the network (10) is determined by a routing protocol which decides whether the next hop address of the data packet corresponds to an intermediate node or the destination node.

17. Network node comprising
transmission means (24) adapted, in use, to transmit data packets in a communication network (10), and
a proxy manager (23) adapted, in use, to decide whether to act as a proxy for a received data packet and, in the affirmative, to store the received data packet and to forward it towards the destination,
**characterized in that**
the proxy manager (23) is configured to decide separately for individual data packets whether to act as a proxy for the received data packet.

18. Network node according to claim 17, wherein the proxy manager (23) is configured to send a local confirmation packet LACK for confirming the reception of the data packet to a node which is indicated as source in the received data packet, if the receiving node is a proxy node or the destination node for the data packet.

19. Network node according to claim 17 or 18, wherein the proxy manager (23) is configured to determine a network distance that a received data packet has traveled through the network (10) starting from a source node or a previous proxy node, in particular a packet hop count, and decides to act as a proxy for the received data packet based on the determined network distance.

20. Network node according to at least one of claims 17 to 19, comprising network monitoring means (25) adapted to determine a network stability criterion and/or a network mobility criterion, and wherein the proxy manager (23) is configured to decide to act as a proxy based on the determined result of the criterion.

21. Network node according to at least one of claims 17 to 20, comprising a buffering module (26) for maintaining a buffering table (27) to store a received data packet, for re-sending the stored packet if no local confirmation packet LACK for the data packet is received within a predetermined time period, and for deleting the stored packet if a local confirmation packet LACK for the stored packet is received within the predetermined time period.

22. Network node according to at least one of claims 17 to 21, comprising transmission reliability control means adapted to control the end-to-end reliability of packet transmissions by performing a retransmission for a data packet for which no global acknowledgment (ACK) is received.

23. Network node according to at least one of claims 17 to 22, comprising sending control means adapted to control the sending of data packets by performing a flow control and/or a sending rate control based on a received local confirmation packet LACK.

24. Network node according to at least one of claims 17 to 23, comprising encapsulation means adapted for encapsulating a data packet before sending it to another node and decapsulation means adapted for decapsulating a received data packet.

25. Communication network for transmitting data packets from a source node to a destination node via at least one intermediate node, wherein
the source node is adapted, in use, to send a data packet to an intermediate node;
the intermediate node is adapted, in use, to receive the data packet from the network and to forward the received data packet to the destination node or another intermediate node;
the intermediate node comprises a proxy manager (23) which is configured to decide whether to act as a proxy for the received data packet and, in the affirmative, to send a local confirmation packet LACK for confirming the reception of the data packet; and
the destination node is adapted, in use, to receive the data packet and to send a local confirmation packet LACK for confirming the reception of the data packet,
**characterized in that**
the proxy manager (23) is adapted, in use, to decide separately for individual data packets whether to act as a proxy for the received data packet.

26. Computer program product directly loadable into the internal memory of a digital computer, comprising software code portions for performing the steps of at least one of claims 1 to 16 when said product is run on the computer.

## Amended claims

### Amended claims in accordance with Rule 86(2) EPC.

**1.** Method for transmitting data packets in a communication network from a source node to a destination node, wherein a node which receives a data packet decides whether to act as a proxy for the received data packet and, in the affirmative, stores the received data packet and forwards it towards the destination,
**characterized in that**
the decision by the receiving node to act as a proxy is made separately for individual data packets of a communication connection.

**17.** Network node comprising
transmission means (24) adapted, in use, to transmit data packets in a communication network (10), and
a proxy manager (23) adapted, in use, to decide whether to act as a proxy for a received data packet and, in the affirmative, to store the received data packet and to forward it towards the destination,
**characterized in that**
the proxy manager (23) is configured to decide separately for individual data packets of a communication connection whether to act as a proxy for the received data packet.

**25.** Communication network for transmitting data packets from a source node to a destination node via at least one intermediate node, wherein
the source node is adapted, in use, to send a data packet to an intermediate node;
the intermediate node is adapted, in use, to receive the data packet from the network and to forward the received data packet to the destination node or another intermediate node; the intermediate node comprises a proxy manager (23) which is configured to decide whether to act as a proxy for the received data packet and, in the affirmative, to send a local confirmation packet LACK for confirming the reception of the data packet;
and
the destination node is adapted, in use, to receive the data packet and to send a local confirmation packet LACK for confirming the reception of the data packet,
**characterized in that**
the proxy manager (23) is adapted, in use, to decide separately for individual data packets of a communication connection whether to act as a proxy for the received data packet.
